# EUROPEAN PATENT APPLICATION

(11) **EP 4 714 271 A1**
(43) Date of publication of application: **25.03.2026**
(21) Application number: 24807222.5
(22) Date of filing: 15.05.2024
(51) Int. Cl.: A23L 11/30, A23J 3/16, A23J 3/34, A23L 11/00

(54) **METHOD FOR PRODUCING SOYBEAN COMPOSITION HAVING IMPROVED FLAVOR**

(30) Priority: 16.05.2023 JP 2023080547
(71) Applicant: Godo Shusei Co., Ltd., Matsudo-shi, Chiba 271-0064 (JP)
(72) Inventor: OGASAWARA, Saori, Matsudo-shi, Chiba 271-0064 (JP); SHINODA, Misaki, Matsudo-shi, Chiba 271-0064 (JP); YUGA, Masaki, Matsudo-shi, Chiba 271-0064 (JP); MORIYA, Takashi, Matsudo-shi, Chiba 271-0064 (JP)
(74) Representative: Wächtershäuser & Hartz Patentanwaltspartnerschaft mbB
(86) International application number: PCT/JP2024/017940
(87) International publication number: WO 2024/237271

(57) **Abstract**

The present invention is directed to elucidate the mechanism of the effect of reducing soybean odor due to a protease and to provide a method for producing a soybean composition with improved flavor. The present invention relates to a soybean composition with reduced soybean odor, comprising one or two selected from the following components (a) and (b): (a) a soybean protein hydrolysate obtained by hydrolyzing a soybean protein-containing ingredient with an endo-type protease and (b) a composition comprising soybean protein and a whey peptide.

## Description

### Technical Field

The present invention relates to a method for producing a soybean composition having an improved flavor.

### Background Art

Recently, growing public awareness of environmental and food-related issues has led to an increase in consumers choosing plant-based alternatives to animal-derived foods. Among these plant-based options, soybeans are a key source of plant-based protein and are commonly used in meat substitutes and dairy substitutes.

However, soybeans have a distinctive green-beany odor that some consumers find unacceptable. This odor is primarily caused by n-hexanal, an aldehyde produced from linoleic acid in soybeans through a two-step enzymatic reaction involving lipoxygenase (LOX) and hydroperoxide lyase. LOX exists in three isozyme forms-LOX1, LOX2 and LOX3. Of these, LOX1 and LOX2 contribute to the formation of n-hexanal, with LOX2 having a stronger effect. In contrast, Non-Patent Literatures 1 and 2 report that LOX3 suppresses n-hexanal production.

One known method for reducing soybean odor involves producing soy milk by heat-treating raw soybeans to inactivate LOX, then grinding the beans in their enzyme-inactivated state to obtain soybean powder, which is subsequently dissolved in water (see Patent Literature 1).

Other approaches to improving soybean flavor using enzymes include grinding soybeans with water containing glucose and glucosidase to eliminate unpleasant odors such as the characteristic soybean odor and green-beany odor (Patent Literature 2), and using peroxidase derived from Marasmius scorodonius (Patent Literature 3).

### Citation List

### Patent Literature

Patent Literature 1: Japanese Patent No. 3885196
Patent Literature 2: Japanese Patent No. 2653150
Patent Literature 3: WO 2010/124976

### Non-Patent Literature

Non-Patent Literature 1: Hitoshi Takamura (2007), Changes of flavors by lipid oxidation products in foods, Oleoscience, Vol. 7, No. 6, 231-235
Non-Patent Literature 2: Hitoshi Takamura, et al. (1991) Inhibition by lipoxygenase-3 of n-hexanal generation in soybeans, FEBS, Vol. 292, No. 1, 2, 42-44

### Summary of Invention

### Technical Problem

However, the above-mentioned technologies face challenges in producing soybean products that are fully acceptable to consumers, particularly due to their limited effectiveness in reducing soybean odor. The present invention aims to provide a soybean composition with improved flavor, along with a method for its production.

### Solution to Problem

The present inventors found that soybean odor can be reduced by adding an endo-type protease to a soybean protein-containing ingredient, even though the overall amount of n-hexanal remains unchanged. This led to the development of the present invention. It is believed that the hydrolysis of soybean protein by the endo-type protease increases the amount of bound hexanal, thereby reducing the level of free hexanal responsible for the odor. Furthermore, it was found that adding a whey peptide to the soybean protein-containing ingredient similarly reduces free hexanal, as the peptide binds to it, resulting in an effect with reduced soybean odor.

That is, the present invention provides the following [1] to [7]:
[1] A soybean composition with reduced soybean odor, comprising one or two selected from the following components (a) and (b):
   (a) a soybean protein hydrolysate obtained by hydrolyzing a soybean protein-containing ingredient with an endo-type protease; and
   (b) a composition comprising soybean protein and a whey peptide;
[2] The composition according to [1], wherein the soybean protein hydrolysate or the whey peptide has a molecular weight of from 6.5 to 55 kDa;
[3] The composition according to [1] or [2], wherein the soybean protein hydrolysate or the whey peptide has a molecular weight of from 10 to 40 kDa;
[4] The composition according to any one of [1] to [3], wherein the endo-type protease is derived from the genus Paenibacillus;
[5] The composition according to any one of [1] to [4], wherein a content of the soybean protein hydrolysate is 10 mass% or more and less than 100 mass% in the soybean composition;
[6] The composition according to [1], wherein a content of the whey peptide is 10 mass% or more and 90 mass% or less in the composition (b); and
[7] A method for producing a soybean composition with reduced soybean odor, comprising a step of applying an endo-type protease to a soybean protein-containing ingredient to generate a soybean protein hydrolysate.

### Advantageous Effects of Invention

According to the present invention, it is possible to obtain a soybean composition with reduced soybean odor without going the need for complex steps. This technology exhibits the effect as long as the composition contains hydrolyzed soybean protein and therefore can be applied to a wide range of soybean-based products.

### Brief Description of Drawings

Figure 1 is a photograph showing the results of SDS-PAGE in Test Examples 1 to 4.
Figure 2 is a photograph showing the results of SDS-PAGE in Test Examples 5 to 8.

### Description of Embodiments

One aspect of the method for producing a soybean composition according to the present invention includes a step of adding an endo-type protease to a soybean protein-containing ingredient to generate a soybean protein hydrolysate.

That is, one aspect of the soybean composition according to the present invention includes (a) a soybean protein hydrolysate obtained by enzymatically hydrolyzing a soybean protein-containing ingredient with an endo-type protease. More specifically, the soybean composition contains both native soybean protein and its hydrolysate. However, as long as hexanal is present in the composition, inclusion of native soybean protein is not essential. Hexanal is present in the soybean protein hydrolysate.

Another aspect of the soybean composition according to the present invention contains (b) a composition containing soybean protein and a whey peptide.

(1) ingredients of soybean composition, (2) amounts thereof, (3) the soybean composition, (4) a method for producing the soybean composition, and (5) use will be described hereinafter in this order.

### <<Ingredients of soybean composition>>

### <Endo-type protease>

The endo-type protease refers to an enzyme that decomposes protein into smaller polypeptides than the protein or single amino acids, among which, it specifically refers to a protease that cleaves non-terminal peptide bonds within the protein structure.

In the present specification, the endo-type protease may be any one capable of hydrolyzing soybean protein to produce a protein hydrolysate with a molecular weight ranging from 6.5 to 55 kDa. Preferably, the enzyme generates a hydrolysate of from 10 to 40 kDa, more preferably from 20 to 35 kDa, and particularly more preferably from 25 to 30 kDa.

The enzyme having a protease activity of the present invention may be a complex enzyme having an endo-type protease activity and an exo-type protease activity but preferably has an endo-type protease activity that is stronger than the exo-type protease activity.

The most suitable (optimum) pH of the endo-type protease is from 4 to 10, more preferably from 5 to 9, and further preferably from 6 to 8.

The optimum temperature of the endo-type protease is preferably from 4°C to 70°C and more preferably from 40°C to 60°C.

The endo-type protease may be in any of an active state or an inactivated state in the final product soybean composition. The endo-type protease present in the soybean composition is preferably inactivated by heating. The heating condition for inactivating the enzyme is preferably heating at high temperature for a short time, for example, heating at from 60°C to 100°C for from 1 to 30 minutes.

### (Type of raw material organism)

Proteases are isolated from a very wide range of organisms including microorganisms. Preferable proteases are proteases derived from microorganisms from the viewpoint of cost and reactivity. Examples of the protease include proteases derived from microorganisms belonging to the genus Bacillus, the genus Paenibavillus, the genus Geobacillus, the genus Aspergillus, the genus Rhizopus, the genus Rhizomucor, or the genus Streptomyces and proteases derived from Lactobacillus.

In the present invention, a protease derived from the genus Paenibacillus is preferably used.

### (Production method of endo-type protease)

The endo-type protease that is used in the present invention can be collected and purified from a microorganism by a known conventional method. Accordingly, the protease can be produced by gene recombination or non-gene recombination. For example, a Paenibacillus polymyxa NBRC 15309 strain can be cultured in a nutrient culture medium manufactured by Difco Laboratories Ltd., and the protease can be obtained from the culture product as a culture supernatant by filtration or centrifugation. The obtained culture supernatant can also be appropriately purified by column chromatography, ammonium sulfate fractionation, or the like. The obtained enzyme solution may be in a liquid form or may be spray-dried or freeze-dried to form a powder. In such a case, a commonly used stabilizer or excipient may be added.

### (Amount of endo-type protease)

The endo-type protease is preferably added in a range of from 0.5 to 500 PU/g with respect to the weight of the soybean protein-containing ingredient, more preferably from 5 to 50 PU/g. Within these ranges, the soybean odor is reduced, and the bitter taste due to the protease disappears.

The amount of the endo-type protease added (enzyme amount) can be calculated as the enzyme activity per enzyme mass based on the enzyme amount of 1.0 PU defined by the following method. One milliliter of an enzyme diluent solution is added to a 0.6% casein aqueous solution (pH 7.5, 2 mM potassium acetate-containing 50 mM tris hydrochloric acid buffer), the mixture is reacted at 30°C for 10 minutes, and 5 mL of a trichloroacetic acid reagent (pH 4.0, 1.8% sodium acetic anhydride, 1.8% trichloroacetic acid, 1.98% acetic acid) is added thereto to stop the reaction. The mixture is further left to stand at 30°C for 30 minutes and is filtrated, and the absorbance at 275 nm is then measured. The enzyme amount (enzyme activity) required to release amino acids corresponding to 1 µg of tyrosine under this condition for 1 minute is defined as 1 PU (Protease Unit).

### <Soybean protein-containing ingredient>

The soybean protein-containing ingredient in the present invention includes not only whole soybean but also processed soybean materials. These ingredients may take the form of solids, liquids, or mixtures thereof. Specific examples include soybean powder dissolved in water; a slurry obtained by adding water to defatted soybeans and grinding them; an extract obtained by extracting defatted soybeans with water and removing the soy pulp or soy protein isolate; soy protein concentrate; and commercially available products such as soybean milk and soy meat. A combination thereof may also be used. While pre-treatment such as heating is not required, it may be performed if desired.

The soybean protein-containing ingredient may be in either a solid form or a liquid form. Preferably, it contains sufficient moisture to enable hydrolysis when an endo-type protease is added. From the viewpoint of facilitating the reaction with the endo-type protease, the soybean protein-containing ingredient according to the present invention is preferably in a liquid form.

The protein content in the soybean protein-containing ingredient may be from 3 to 95 mass%, preferably from 3 to 35 mass%, more preferably from 3.5 to 33 mass%, and further preferably from 3.5 to 30 mass%.

The soybean protein-containing ingredient contains hexanal. It is inferred that a portion of the hexanal is bound to or incorporated within the soybean protein, and the remaining is present as free hexanal.

The total amount of hexanal varies depending on the extraction method and the soybean variety. Of this total, approximately 20% is in a bound state, and about 80% remains free. The soybean protein hydrolysate binds to free hexanal, thereby increasing the proportion of bound hexanal and reducing the characteristic soybean odor. When present in an aqueous solution, the soybean protein hydrolysate readily binds to free hexanal, making the deodorizing effect more easily achievable.

Although it depends on the kind of the soybean, the soybean protein contained in the soybean protein-containing ingredient has a molecular weight of approximately from 70 to 400 kDa. In such soybean protein, 23% is β-conglycinin of approximately 180 kDa, 46% is glycinin of approximately 320 kDa, and 31% is lipophilic protein rich in polar lipids such as lecithin and glycolipids.

### <Soybean protein hydrolysate>

The soybean odor derived from hexanal can be reduced by hydrolyzing the soybean protein contained in the soybean protein-containing ingredient. This is inferred that free hexanal tends to be bound to or incorporated within the soybean protein hydrolysate. The soybean protein hydrolysate preferably has a molecular weight of from 6.5 to 55 kDa, more preferably from 10 to 40 kDa, further preferably from 20 to 35 kDa, and further more preferably from 25 to 30 kDa. The effect of reducing the soybean odor tends to be obtained by adding a soybean protein hydrolysate having such a molecular weight to the soybean composition. The soybean protein hydrolysate may contain water or may not contain water. A soybean protein hydrolysate is obtained by decomposing the soybean protein-containing ingredient containing water by an endo-type protease, and the moisture contained in the soybean protein hydrolysate may be then removed.

The content of the soybean protein hydrolysate in the soybean composition is, in terms of solid content, preferably 10 mass% or more and less than 100 mass%, more preferably 20 mass% or more and 90 mass% or less, further preferably 30 mass% or more and 80 mass% or less, and further more preferably 30 mass% or more and 70 mass% or less from the viewpoint of the effect of reducing the soybean odor.

The lower limit of the content of the soybean protein hydrolysate when the soybean composition contains water may be 0.1 mass% or more, 0.5 mass% or more, 1 mass% or more, 5 mass% or more, 10 mass% or more, 20 mass% or more, 30 mass% or more, 40 mass% or more, or 50 mass% or more. The upper limit of the content of the soybean protein hydrolysate when the soybean composition contains water may be less than 100 mass%, 90 mass% or less, 80 mass% or less, 70 mass% or less, or 60 mass% or less. These lower limits and upper limits can be appropriately combined.

### <Whey peptide>

The whey peptide that is used in the soybean composition of the present invention is not particularly limited, and a commercially available whey peptide may be used as long as a peptide of from 6.5 to 55 kDa is included. A whey peptide having at least a molecular weight selected from 6.5, 14, and 55 kDa is preferably used.

The whey peptide may be derived from milk or soybeans.

Examples of commercially available products include LIMITEST Whey Peptide (manufactured by Happou-Shoukai Co., Ltd.). A hydrolysate produced using a protease may also be used.

The content of the whey peptide in the soybean composition is, in terms of solid content, preferably 10 mass% or more and 90 mass% or less, more preferably 20 mass% or more and 80 mass% or less, further preferably 30 mass% or more and 70 mass% or less, and further more preferably 30 mass% or more and 60 mass% or less from the viewpoint of the effect of reducing the soybean odor.

The lower limit of the content of the whey peptide when the soybean composition contains water may be 0.1 mass% or more, 0.5 mass% or more, 1 mass% or more, 5 mass% or more, 10 mass% or more, 20 mass% or more, 30 mass% or more, 40 mass% or more, or 50 mass% or more. The upper limit of the content of the whey peptide when the soybean composition contains water may be 90 mass% or less, 80 mass% or less, 70 mass% or less, or 60 mass% or less. These lower limits and upper limits can be appropriately combined.

### <Soybean composition>

One aspect of the soybean composition of the present invention contains (a) the soybean protein hydrolysate and preferably contains soybean protein and the soybean protein hydrolysate. The soybean composition may contain water or may not contain. As long as hexanal is contained in the soybean composition, the soybean composition does not have to contain the soybean protein inherent to soybeans.

The soybean composition of another aspect of the present invention includes (b) a composition including soybean protein and a whey peptide.

Here, in the hexanal, hexanal bound to or included in at least one of the soybean protein hydrolysate and/or whey peptide and free hexanal are included. If the free hexanal included in soybeans is in a state of being bound to or included in the soybean protein hydrolysate and/or whey peptide, although the total amount of hexanal does not change, the odor of hexanal itself becomes less noticeable.

Accordingly, even if it is difficult to remove hexanal, the soybean composition of the present invention can exhibit the effect of reducing the soybean odor derived from hexanal.

### <Soybean product>

A soybean product incorporating the soybean composition of the present invention may include additional optional components, provided they do not interfere with the intended effects of the invention. Examples of such optional components include nutritional fortifiers such as minerals and vitamins; soybean oil and other vegetable oils; sugars; seasonings such as salt; fruit juice (including fruit purée and blends of juice and purée); vegetable juice; milk and dairy products; and milky beverages containing flavoring agents such as husk powder, fruit pulp, and other flavorings.

### <Method of producing soybean composition>

The method for producing a soybean composition of the present invention includes a step of preparing a soybean protein-containing composition and a step of adding an endo-type protease to the composition. For example, the production method includes processes of (1) dissolving a soybean powder in water and stirring the solution at room temperature, (2) adding an endo-type protease to the soybean protein-containing ingredient in a predetermined concentration, (3) reacting the obtained mixture solution at room temperature for 2 hours, and so on.

The timing of adding the endo-type protease is not particularly limited. The endo-type protease may be added to a commercially available product such as soybean milk or may be added at a manufacturing stage of a soybean product such as soybean milk.

Endo-type protease treatment of the soybean protein-containing ingredient is preferably performed at a reaction temperature of from 4°C to 70°C for from 0.1 to 96 hours. The reaction temperature is preferably from 10°C to 70°C, more preferably from 15°C to 60°C, and further preferably from 20°C to 50°C. The reaction time is preferably from 0.3 to 12 hours, more preferably from 0.5 to 5 hours, and particularly preferably from 1 to 4 hours.

The pH of the ingredient may be adjusted before the endo-type protease treatment of the soybean protein-containing ingredient. The pH of the ingredient is preferably in a range of from 3 to 11, more preferably from 4 to 10, further preferably from 5 to 9, and particularly preferably from 6 to 8.

### <<Use of soybean composition>>

The soybean composition may be formed into soybean meat as a meat substitute or soybean milk as a milk substitute. Alternatively, the soybean composition may be used as a fermentation ingredient and can be made into fermented soybean milk.

### Examples

The present invention will be then described in more detail with reference to Examples, but the present invention is not limited thereto in any way.

### <<Production of soybean powder solution>>

### <Production Example 1>

### (Material)

Soybean protein-containing ingredient (soybean powder): trade name: Soybean Milk Base made from only Soybean (available from Kogasangyou Corporation)
Protease: trade name: ADMIL (manufactured by Godo Shusei Co., Ltd., enzyme derived from the genus Paenibacillus)

### (Production method)

The soybean powder was dissolved in water at a concentration of 10 mass%. The protease was added to this solution at 5.0 PU/g (final concentration), and the mixture was reacted by being left to stand at an ordinary temperature for 2 hours to obtain a soybean powder solution of Production Example **1.**

### <Production Example 2>

A soybean powder solution of Production Example 2 was obtained as in Production Example 1 except that the protease was Newlase F3G (manufactured by Amano Enzyme Inc., enzyme derived from the genus Rhizopus).

### <Production Example 3>

A soybean powder solution of Production Example 3 was obtained as in Production Example 1 except that whey peptide derived from milk (trade name: LIMITEST Whey Peptide, manufactured by Happou-Shoukai Co., Ltd.) was added in an amount of 5 mass% instead of the protease.

### <Comparative Example 1>

A soybean powder solution of Comparative Example 1 was obtained as in Production Example 1 except that the protease and whey peptide were not used.

### <<Evaluation>>

### <Test Example (sensory evaluation)>

Soybean powder solutions from Production Examples 1 to 3 and Comparative Example 1 were subjected to sensory evaluation. The evaluation was performed by six evaluators engaged in enzyme research and development. Soybean odor (green-beany odor) and bitter taste were assessed using the following 4-point scale, and the average score were calculated. The results are shown in Table 1 (Production Examples 1 to 3 and Comparative Example 1).
1: Least perceived green-beany odor or bitter taste;
2: Slightly perceived green-beany odor or bitter taste (third most intense);
3: Moderately perceived green-beany odor or bitter taste (second most intense); and
4: Most intense green-beany odor or bitter taste perceived.

**[Table 1]**

| | Production Example 1 | Production Example 2 | Production Example 3 | Comparative Example 1 |
|---|---|---|---|---|
| Soybean odor | 2.0 | 2.3 | 2.2 | 3.5 |
| Bitter taste | 2.3 | 2.7 | 2.2 | 2.8 |

It was demonstrated that the soybean odor is reduced by adding a protease or whey peptide. In addition, Production Example 1 showed a particularly strong deodorizing effect. It was demonstrated that the bitter taste was comparable to or lower than that in Comparative Example 1. In general, although some peptides are known to have bitter taste, it was confirmed that bitter taste was not caused by the peptides generated by protease treatment or the whey peptide added in Production Examples 1 to 3 and that bitter taste did not make the soybean odor less noticeable. From the above, it was believed that the generated peptide and the added peptide bound to free n-hexanal to reduce the soybean odor.

### <<SDS-PAGE (SDS polyacrylamide gel electrophoresis)>>

### <Test Example 1>

The soybean powder solution produced in Production Example 1 was diluted 30 times, and an equivalent amount of an SDS sample buffer was further added thereto, followed by heating at 100°C for 3 minutes. Then, 10 µL of the resulting sample was subjected to 10% polyacrylamide gel electrophoresis.

### <Test Example 2>

The soybean powder solution produced in Production Example 2 was subjected to electrophoresis as in Test Example 1.

### <Test Example 3>

A solution obtained by dissolving the whey peptide used in Production Example 3 in water to a concentration of 10% was subjected to electrophoresis as in Test Example 1.

### <Test Example 4>

The soybean powder solution produced in Comparative Example 1 was subjected to electrophoresis as in Test Example 1.

### <<Tricine-SDS-PAGE>>

### <Test Example 5>

The soybean powder solution produced in Production Example 1 was diluted 30 times, and an equivalent amount of a tricine SDS sample buffer was further added thereto, followed by heating at 100°C for 3 minutes. Then, 10 µL of the resulting sample was subjected to 15% tricine polyacrylamide gel (e-PAGEL E-R15S) electrophoresis.

### <Test Example 6>

The soybean powder solution produced in Production Example 2 was subjected to electrophoresis as in Test Example 5.

### <Test Example 7>

A solution obtained by dissolving the whey peptide used in Test Example 3 in water to a concentration of 10% was subjected to electrophoresis as in Test Example 5.

### <<Confirmation of molecular weight of soybean protein hydrolysate or whey peptide>>

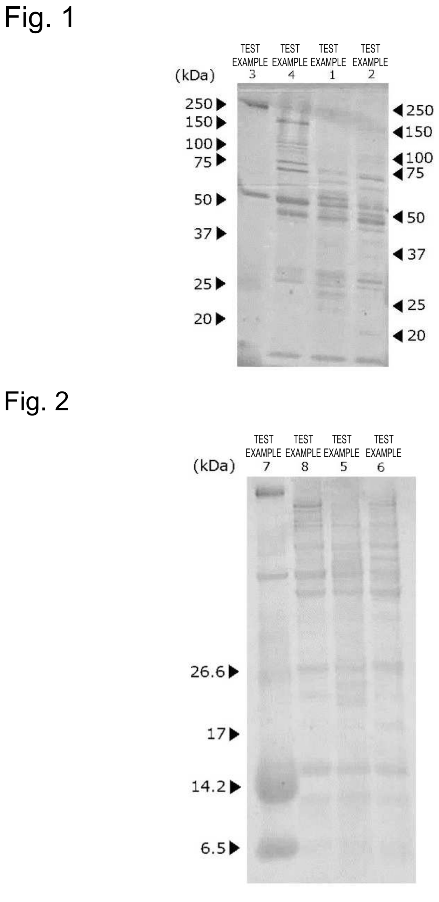

The results of electrophoresis in Test Examples 1 to 4 are shown in Figure 1, and the results of electrophoresis in Test Examples 5 to 8 are shown in Figure 2.

As is shown in Test Examples 1 and 2 of Figure 1, the bands of from 70 to 200 kDa observed in Test Example 4 were decreased or disappeared by adding a protease, and bands near from 25 to 35 kDa were increased. As is shown in Test Examples 5 and 6 of Figure 2, there were not many changes in the bands of less than 25 kDa.

As is shown in Test Example 3 of Figure 1 and Test Example 7 of Figure 2, in the whey peptide used in Production Example 3, bands were observed at three positions near 6.5, 14, and 55 kDa.

From the above, it was believed that the soybean odor was reduced by binding of the soybean protein hydrolysates of from 25 to 30 kDa in Production Examples 1 and 2 to n-hexanal or binding of any of the peptides of 6.5, 14, or 55 kDa in Production Example 3 to n-hexanal.

## Claims

1. A soybean composition with reduced soybean odor, comprising one or two selected from the following components (a) and (b):
(a) a soybean protein hydrolysate obtained by hydrolyzing a soybean protein-containing ingredient with an endo-type protease; and
(b) a composition comprising soybean protein and a whey peptide.

2. The composition according to claim 1, wherein the soybean protein hydrolysate or the whey peptide has a molecular weight of from 6.5 to 55 kDa.

3. The composition according to claim 1 or 2, wherein the soybean protein hydrolysate or the whey peptide has a molecular weight of from 10 to 40 kDa.

4. The composition according to any one of claims 1 to 3, wherein the endo-type protease is derived from the genus Paenibacillus.

5. The composition according to any one of claims 1 to 4, wherein a content of the soybean protein hydrolysate is 10 mass% or more and less than 100 mass% in the soybean composition.

6. The composition according to claim 1, wherein a content of the whey peptide is 10 mass% or more and 90 mass% or less in the soybean composition.

7. A method for producing a soybean composition with reduced soybean odor, comprising a step of applying an endo-type protease to a soybean protein-containing ingredient to generate a soybean protein hydrolysate.
